# EUROPEAN PATENT SPECIFICATION

(11) **EP 3 965 394 B1**
(45) Date of publication and mention of the grant of the patent: **18.12.2024**
(21) Application number: 20194841.1
(22) Date of filing: 07.09.2020
(51) Int. Cl.: H04L 67/12, H04L 67/1014, H04L 61/4511, H04W 4/48, H04W 12/03, H04L 9/40

(54) **METHOD FOR CONTROLLING AN INTERNET-BASED COMMUNICATION**
VERFAHREN ZUR STEUERUNG VON INTERNETBASIERTER KOMMUNIKATION
PROCÉDÉ DE COMMANDE D'UNE COMMUNICATION PAR INTERNET

(43) Date of publication of application: 09.03.2022
(73) Proprietor: VOLKSWAGEN AG, 38440 Wolfsburg (DE)
(72) Inventor: van Kasteren, Jarno, 5688TZ Oirschot (NL)

(56) References cited:
- CN-A- 109 510 833
- US-A1- 2012 159 170
- US-A1- 2016 269 356

## Description

The present invention relates to a method and a system for controlling an internet-based communication within a motor vehicle.

Today vehicle manufacturers often offer their customers the use of data that customers may use for services provided or by free web surfing within the vehicle. The internet connection is provided by the vehicle itself. Alternatively, vehicle users may connect to the internet via the relevant internet service providers of their user terminals. Not only for reasons of data protection laws, but also in particular for security-related aspects, it is necessary to secure the communication of users or user terminals with service providers within a vehicle. In particular, so-called Domain Name System (hereinafter DNS) spoofing attacks on DNS servers or DNS communications represent a risk with regard to secure data traffic.

DNS servers are used in the context of communication over the internet to resolve names, i.e. to convert a domain name entered by a user into a numerical Internet Protocol address (IP address) readable by a computer. In a DNS spoofing attack, the IP address belonging to a domain is spoofed so that the terminal device establishes a connection to a spoofed IP address and the data traffic is redirected to a false server. Such redirection sometimes may steal important and security-relevant user data. Various forms of DNS spoofing attacks are known, which are directed either at the user (the user terminal) or to the local server, or at the response of the DNS-server. Attacks on the DNS server itself are also known. In the context of attacks on the user (the user terminal), the DNS server of the local system in particular may be changed and, for example in combination with a corresponding malware, may be constantly changed again after an attempted repair of the change.

Methods for securing data traffic between users or user terminals and service providers within a motor vehicle, in particular for preventing DNS-spoofing attacks, are known from the state of the art, for example from documents CN 109 510 833 A, US 2012/159170 A1 and US 2016/269356 A1. Adversely, the known methods are often associated with complicated encryption and are therefore either technically too complex and expensive or too time-consuming and uncomfortable for users.

Therefore, it is the object of the present invention to at least partially eliminate the disadvantages described above. In particular, it is the object of the present invention to provide a method as well as a system for controlling an internet-based communication within a motor vehicle, which offers a high data security, in particular a reliable protection against DNS-spoofing attacks, and which is technically easy and inexpensive to implement and at the same time offers a high user comfort.

The above-mentioned issue is solved by a method with the features of claim 1 and a system according to claim 6. Further features and details of embodiments of the invention are presented in the dependent claims, the description and the drawings. Technical features, which are disclosed for the method, are also valid in connection with the system and vice versa.

The method in accordance with the invention for controlling an internet-based communication within a motor vehicle comprises receiving a user request from a user terminal by means of a proxy server, for creating a connection of a user terminal with a backend server, wherein the proxy server is a SOCKS server and is comprised within a connection unit, processing the user request to select a network interface for connecting the user terminal to the backend server, and selecting a DNS server based on the selected network interface to resolve a Uniform Resource Locator (URL) of the backend server to create a connection between the user terminal and the backend server.

A motor vehicle is to be understood as any motorized vehicle such as a passenger car, a truck, a ship, an excavator, a harvester, a crane or an airplane.. In the context of the invention, internet-based communication may be understood to mean in particular the exchange of information using the communication infrastructure of the internet as the technical basis. The internet may be made available by a vehicle or via internet service providers by users or user terminals. According to the invention, a user inquiry for establishing a connection of a user and/or a user terminal device with a backend server may be made in particular for the purpose of executing a service. In this context, a service may be understood to be, for example, a vehicle-specific service, an entertainment service or simply free web access.

A vehicle-specific service may, for example, automatically alert rescue services in the event of an accident and - if necessary - guide them to the scene of the accident via GPS. A vehicle-specific service may also use a smartphone or tablet to connect to a vehicle in order to be able to quickly locate the vehicle, unlock or lock the vehicle using the terminal device or switch on a parking heater or air conditioning system or similar remotely. Entertainment services may in particular be streaming services for videos, audio books, podcasts, newspapers or weather applications or the like. After sending a user request to establish a connection between a user and/or user terminal device and a backend server, the user request may be received, for example, by a server of the connection unit.

Individual procedural steps of embodiments of the method may be carried out in the order listed, but may also deviate at least partially from the proposed order. It is also conceivable that one or more steps are executed repeatedly, in particular cyclically.

In some embodiments, with regard to a fast and comprehensive selection of a suitable DNS server, it may be advantageous to provide that the processing of the user request includes a selection of possible DNS servers for connecting to the requested backend server. Such a selection may, for example, be considered as a kind of pre-selection, which preferably allows a final selection to be made more quickly, especially if, based on the selected network interface, not only a single DNS server is considered.

In the context of a secure, fast and technically simple processing of the user request within the connection unit, according to the invention the processing of the user request takes place by reading out an allocation table. The allocation table may be in the form of a vehicle transaction type list. A vehicle transaction type list may be understood here as a list which may be stored within the vehicle or externally, in which specific connection parameters for individual network connections or backend servers are stored. The vehicle transaction type list may comprise entries for a large number of backend servers that may be requested in a vehicle.

With regard to a fast and uncomplicated processing, according to the invention, when processing the user request, it is checked whether an entry exists in the allocation table for the requested backend server, which defines a specific network interface for connecting to the backend server. For example, it may be provided that the definition is different depending on location and/or time. It is also conceivable that the definition is in some way dependent on the user or the user terminal device.

In some embodiments, in the context of a particularly user-friendly implementation of the method according to the invention, it is also conceivable that the execution of a registration procedure is provided. The registration procedure may comprise entering a backend server in an allocation table to define specific network interfaces for connection to the backend server. Such a registration procedure is particularly beneficial in the context of an initial introduction of certain backend servers or certain services, in order to be able to take into account service providers not initially considered.

In some embodiments, within the scope of a compact design that is as centrally controlled as possible and particularly flexible processing, communication could be established via an entity within the motor vehicle configured for mobile communication, hereinafter referred to as mobile communication unit. In such embodiments, Internet connectivity may be established via an eSIM card. By using an embedded Subscriber Identity Module (eSIM), it is possible, for example, to easily create a number of different profiles that may be reconfigured later as desired.

In some embodiments the connection unit is configured to process a plurality of user requests for creating a connection of a user terminal device with a backend server, at least partially, simultaneously in order to enable simultaneous access to services for several users.

In the context of a fast and secure exchange of information during the transfer of data within a motor vehicle, some embodiments of the invention also allow for the execution of services via the use of backend servers. The individual backend servers may be accessible via more than one network interface. For example, a backend server may be accessible via a first and second network interface. It goes without saying that more than two network interfaces may also be used to connect to a backend server.

Embodiments of the invention further relate to a system for controlling internet-based communication within a motor vehicle, wherein the system is configured to carry out the method described above.

The system comprises a connection unit, wherein the connection unit is formed in the form of a SOCKet Secure (SOCKS) gateway.

In some embodiments a plurality of backend servers may be reached for the execution of services. This may give rise to a convenient and at the same time flexible system for the transfer of data within a motor vehicle. In some embodiments, individual backend servers may be reachable via more than one network interface. The more than one network interface may be connected to the connection unit.

According to the invention, a storage unit for storing an allocation table is provided for the definition of specific network interfaces for connection to the backend server. This may serve to provide a secure, fast and insusceptible execution of a concrete system for the regulation of internet-based communication within a motor vehicle. Local storage allows for faster access to the relevant data without being dependent on current network capacities. A storage unit may therefore be provided in addition to a remote storage unit accessible via wireless communication.

In some embodiments, within the scope of a compact design which is as centrally controlled as possible and a particularly flexible processing, it is conceivable that the system comprises a mobile communication unit. The mobile communication unit may comprise an eSIM card for establishing internet connectivity.

In some embodiments, within the scope of an extremely secure execution of a system for controlling internet-based communication within a motor vehicle, it is also conceivable that an encryption unit is provided for the encryption of the transmitted data. Such an encryption unit may be provided for the transmission of strictly confidential data, for example, and in particular serve as an additional safeguard.

Embodiments of the invention further relate to a motor vehicle. The motor vehicle may be designed to carry out one or more embodiments of the method described above. Alternatively, or additionally, the motor vehicle may comprise one or more embodiments of the system described above.

Further benefits, features and details of embodiments of the invention will be presented in the following description, in which, with reference to the drawings, examples of how embodiments of the invention may be implemented are described.

It is shown below:
- Fig. 1: schematic representation of a method for controlling internet-based communication within a motor vehicle according to an embodiment of the invention,
- Fig. 2: schematic representation of a system for controlling internet-based communication within a motor vehicle according to an embodiment of the invention,
- Fig. 3: schematic representation of a motor vehicle comprising a system for controlling internet-based communication according to an embodiment of the invention.

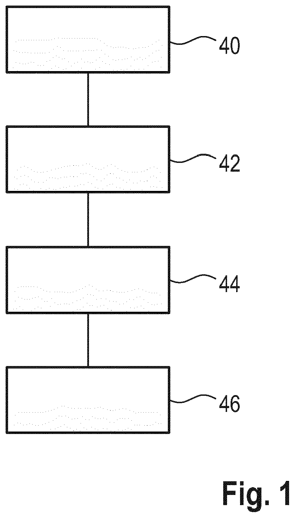

Fig. 1 shows a schematic representation of the individual steps of a method for controlling internet-based communication within a motor vehicle.

The method comprises receiving a user request 42 for creating a connection of a user 4 and/or user terminal 4 with a backend server 12, 14 by means of a connection unit 6, processing the user request 44 for selecting a network interface 24a, 24b, 24c, 24d for connecting the user 4 and/or user terminal 4 to the backend server 12, 14 within the connection unit 6, and selecting 46 a DNS server 22a, 22b, 22c based on the selected network interface 24a, 24b, 24c, 24d for resolving the Uniform Resource Locator (URL) of the backend server 12, 14 to create a connection between the user 4 and/or user terminal 4 and the backend server 12, 14. The selecting 46 may be executed by the connection unit 6 as well. The user request is sent by a user 4 and/or user terminal, depicted as action 40.

The processing 44 of the user request may in particular include a selection of possible DNS servers for connecting to the requested backend server 12, 14.

It is also conceivable that the processing 44 of the user request is carried out by reading out an allocation table 18. The allocation table 18 may be formed in the form of a vehicle transaction type list.

In some embodiments, the method further includes, during processing 44 of the user request, checking whether an entry exists in an allocation table 18 for the requested backend server 12, 14, which defines a specific network interface 24a, 24b, 24c, 24d for connection to the backend server 12, 14. Alternatively, the processing 44 may include such checking.

For backend servers or service providers that are not yet registered, the execution of a registration procedure may be provided. Such registration procedure may comprise entering a backend server 12, 14 in an allocation table 18 for defining specific network interfaces 24a, 24b, 24c, 24d for connection to the backend server 12, 14.

Communication may be established in particular via a mobile communication unit 16 of the motor vehicle 26. Internet connectivity may then be established via an eSIM card.

In order to enable a plurality of users 4 or user terminals 4 to simultaneously establish a connection with a backend server 12, 14, it may be further provided that a plurality of user requests for establishing a connection of a user 4 and/or user terminal 4 with a backend server 12, 14 is received via a first communication channel 10 and processed within the connection unit 6, preferably at least partially simultaneously received and processed.

The services may be executed in particular by using the backend servers 12, 14, whereby individual backend servers 12, 14 may preferably be reached via more than one network interface 24a, 24b, 24c, 24d.

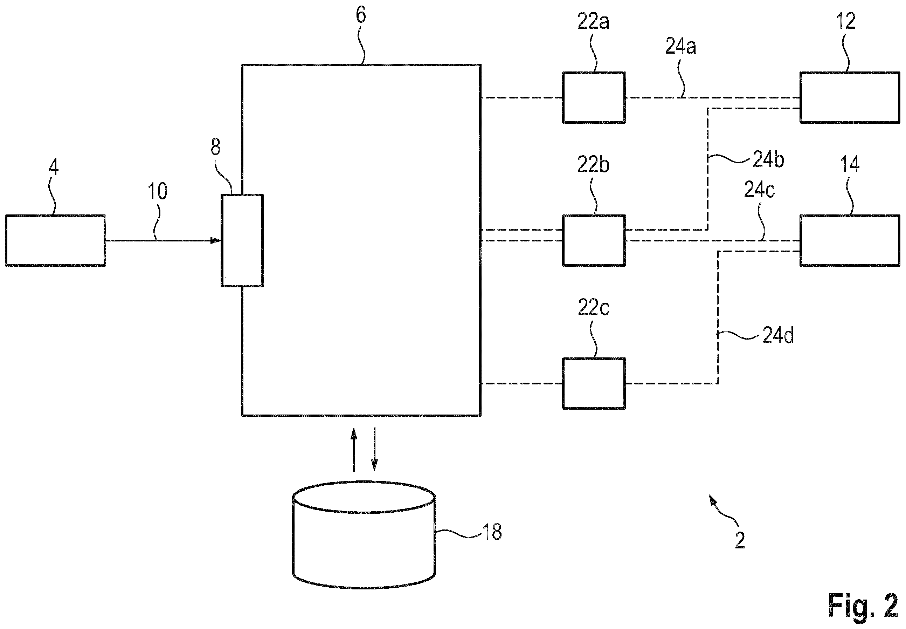

Fig. 2 shows a schematic representation of a system for controlling Internet-based communication 2 within a motor vehicle.

The system 2 comprises a communication channel 10 for transmitting a user request for creating a connection of a user 4 and/or user terminal device 4 with a backend server 12, 14, a connection unit 6 for processing 44 a user request. The connection unit comprises a server 8, e.g. a proxy server, for receiving 42 the user request.

The connection unit 6 may be formed in the form of a SOCKS gateway. The server 8 may take the form of a proxy server, for example in the form of a SOCKS server. The SOCK-Server offers improved security for the users or user-devices, as the SOCKS server is configured to prevent such users or user-devices to communicate directly with the backend servers 12, 14. Such direct communication increases the risk of being exposed to possible sources of danger. Since a SOCKS-Server is a standardized server, it is supported and is easily accessed by a large number of possible clients.

The system 2 is designed in such a way that a plurality of backend servers 12, 14 may be reached for the execution of services. Individual backend servers 12, 14 are connected to the connection unit 6 and may be reached via one or more network interfaces 24a, 24b, 24c, 24d.

In some embodiments, the system 2 further includes an internally or externally arrangeable storage unit for storing an allocation table 18 for defining specific network interfaces 24a, 24b, 24c, 24d for connection to the backend server 12, 14. Within the allocation table 18 there is preferably an entry for specific backend servers 12, 14 or backend connections with regard to the definition of at least one specific network interface 24a, 24b, 24c, 24d.

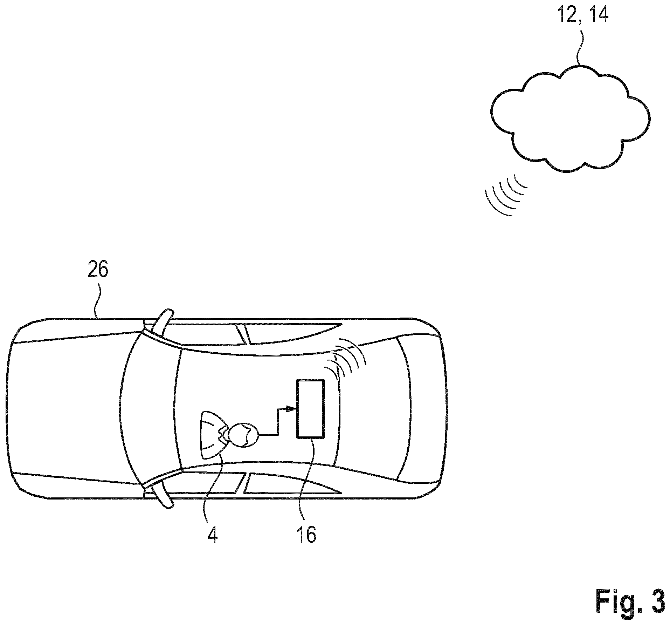

Fig. 3 shows a schematic representation of a motor vehicle 26 The motor vehicle 26 may comprise, at least partially, embodiments of the system 2 depicted in and described with reference to Fig. 2.

A user request of a user 4 and/or user terminal 4 may be received by a mobile communication unit 16 arranged within the vehicle 26. The mobile communication unit 16 may take the form of a telematics control unit (TCU). The mobile communication unit 16 includes a modem, such as a network access device, and may further include the connection unit 6. The connection unit 6 is communicatively coupled to the modem. Alternatively, the connection unit 6 is located outside the mobile communication unit 16. Via the mobile communication unit 16, wireless communication with the backend servers 12, 14, for example, may take place in accordance with embodiments of the method described above. It is understood that parts of the system 2 in accordance with the method of the invention may also be located remotely from the vehicle 26 or other components of system 2 and may be accessible, for example, via wireless communication. In the present case, a rewriting or entry in the allocation table 18 may be made, for example via a communication with a backend server 12, for example a server of the vehicle manufacturer of the vehicle 26, which is to define specific network interfaces 24a, 24b, 24c, 24d for certain backend connections or backend servers 12, 14.

Embodiments of the method and system described above provide in a technically simple and cost-effective manner a convenient and secure possibility for internet-based communication within a motor vehicle 26, which in particular offers reliable protection against DNS-spoofing attacks. The scope of protection is defined by the claims.

### List of reference signs

- 2: System for controlling an internet-based communication
- 4: User/user terminal device
- 6: Connection unit
- 8: Server
- 10: Communication channel
- 12: First backend server
- 14: Second backend server
- 16: Mobile communication unit
- 18: Allocation table
- 22a: First DNS server
- 22b: Second DNS server
- 22c: Third DNS server
- 24a: First network interface
- 24b: Second network interface
- 24c: Third network interface
- 24d: Fourth network interface
- 26: Motor vehicle

- 40: Sending a user request
- 42: Receiving the user request
- 44: Processing the user request
- 46: Selecting a specific DNS server

## Claims

1. A method for controlling internet-based communication within a motor vehicle (26), the method comprising:
- receiving a user request (42) from a user terminal (4) by means of a proxy server, wherein the proxy server is a SOCKS server and is comprised within a connection unit (6), the user request requesting a connection of the user terminal (4) with a backend server (12, 14);
- processing (44) the user request by the connection unit (6) and selecting by the connection unit (6) a network interface (24a, 24b, 24c, 24d) for connecting the user terminal (4) to the backend server (12, 14); and
- selecting (46) a DNS server (22a, 22b, 22c) based on the selected network interface (24a, 24b, 24c, 24d) for resolving the Uniform Resource Locator (URL) of the backend server (12, 14) to create a connection between the user terminal (4) and the backend server (12, 14),
- wherein the processing (44) of the user request by the connection unit (6) is carried out by reading out an allocation table (18), wherein the allocation table (18) is stored in a storage unit, wherein the allocation table (18) comprises entries for backend servers (12, 14).

2. Method according to claim 1,
**characterized in that**,
the processing (44) of the user request includes selecting possible DNS servers for connecting to the requested backend server (12, 14).

3. Method according to one of the preceding claims,
**characterized in that**,
when processing the user request (44), carrying out a check to determine whether an entry exists in an allocation table (18) for the requested backend server (12, 14), which entry defines a specific network interface (24a, 24b, 24c, 24d) for connection to the backend server (12, 14).

4. Method according to one of the preceding claims,
**characterized in that**,
providing execution of a registration procedure, the registration procedure preferably comprising entering a backend server (12, 14) in an allocation table (18) for defining specific network interfaces (24a, 24b, 24c, 24d) for connection to the backend server (12, 14).

5. Method according to one of the preceding claims,
**characterized in that**,
a plurality of user requests for creating a connection of a user terminal device (4) with a backend server (12, 14) are received by and processed within the connection unit (6), at least partially simultaneously received and processed.

6. System (2) for controlling an internet-based communication within a motor vehicle (26), wherein the system (2) is configured to carry out a method according to one of the preceding claims.

7. System (2) according to claim 6,
**characterized in that**,
the system further comprises a storage unit for storing an allocation table (18) for defining specific network interfaces (24a, 24b, 24c, 24d) for connection to the backend server (12, 14).

8. System (2) according to one of the claims 6 or 7,
**characterized in that**,
**in that** the connection unit (6) is part of a mobile communication unit (16) ,

9. System (2) according to claim 8, **characterized in that** the system (2) comprises a mobile communication unit (16), wherein the mobile communication unit (16) preferably comprises an eSIM card for establishing internet connectivity.

10. System according to one of the claims 6 to 9,
**characterized in that**,
the system further comprises an encryption unit for encrypting the data to be transmitted.

11. System (2) according to any one of claims 6 to 10,
**characterized in that**,
the system further comprises a plurality of backend servers (12, 14) for executing services, wherein individual backend servers (12, 14) are connected to the connection unit via one or more network interfaces (24a, 24b, 24c, 24d).

12. Motor vehicle (26), comprising a system (2) according to any one of claims 6 to 11.

## Patentansprüche

1. Verfahren zum Steuern internetbasierter Kommunikation innerhalb eines Kraftfahrzeugs (26), das Verfahren umfassend:
- Empfangen einer Benutzeranforderung (42) von einem Benutzerendgerät (4) mittels eines Proxyservers, wobei der Proxyserver ein SOCKS-Server ist und innerhalb einer Verbindungseinheit (6) enthalten ist, wobei die Benutzeranforderung eine Verbindung des Benutzerendgeräts (4) mit einem Backendserver (12, 14) anfordert;
- Verarbeiten (44) der Benutzeranforderung durch die Verbindungseinheit (6) und Auswählen, durch die Verbindungseinheit (6), einer Netzwerkschnittstelle (24a, 24b, 24c, 24d) zum Verbinden des Benutzerendgeräts (4) zu dem Backendserver (12, 14); und
- Auswählen (46) eines DNS-Servers (22a, 22b, 22c) basierend auf der ausgewählten Netzwerkschnittstelle (24a, 24b, 24c, 24d) zum Auflösen des Uniform Resource Locator (URL) des Backendservers (12, 14), um eine Verbindung zwischen dem Benutzerendgerät (4) und dem Backendserver (12, 14) herzustellen,
- wobei das Verarbeiten (44) der Benutzeranforderung durch die Verbindungseinheit (6) durch Auslesen einer Zuordnungstabelle (18) durchgeführt wird, wobei die Zuordnungstabelle (18) in einer Speichereinheit gespeichert ist, wobei die Zuordnungstabelle (18) Einträge für Backendserver (12, 14) umfasst.

2. Verfahren nach Anspruch 1,
**dadurch gekennzeichnet, dass**
das Verarbeiten (44) der Benutzeranforderung das Auswählen möglicher DNS-Server für das Verbinden zu dem angeforderten Backendserver (12, 14) einschließt.

3. Verfahren nach einem der vorstehenden Ansprüche,
**dadurch gekennzeichnet, dass,**
wenn die Benutzeranforderung (44) verarbeitet wird, eine Überprüfung durchgeführt wird, ob ein Eintrag in einer Zuordnungstabelle (18) für den angeforderten Backendserver (12, 14) existiert, wobei der Eintrag eine spezifische Netzwerkschnittstelle (24a, 24b, 24c, 24d) für die Verbindung zu dem Backendserver (12, 14) definiert.

4. Verfahren nach einem der vorstehenden Ansprüche,
**dadurch gekennzeichnet, dass**
eine Ausführung einer Registrierungsprozedur bereitgestellt wird, die Registrierungsprozedur vorzugsweise umfassend ein Eintragen eines Backendservers (12, 14) in eine Zuordnungstabelle (18) zum Definieren spezifischer Netzwerkschnittstellen (24a, 24b, 24c, 24d) für die Verbindung zu dem Backendserver (12, 14).

5. Verfahren nach einem der vorstehenden Ansprüche,
**dadurch gekennzeichnet, dass**
eine Vielzahl von Benutzeranforderungen zum Herstellen einer Verbindung eines Benutzerendgeräts (4) mit einem Backendserver (12, 14) durch die Verbindungseinheit (6) empfangen und innerhalb dieser verarbeitet werden, wobei diese mindestens teilweise gleichzeitig empfangen und verarbeitet werden.

6. System (2) zum Steuern einer internetbasierten Kommunikation innerhalb eines Kraftfahrzeugs (26), wobei das System (2) konfiguriert ist, um ein Verfahren nach einem der vorstehenden Ansprüche durchzuführen.

7. System (2) nach Anspruch 6,
**dadurch gekennzeichnet, dass**
das System ferner eine Speichereinheit zum Speichern einer Zuordnungstabelle (18) zum Definieren spezifischer Netzwerkschnittstellen (24a, 24b, 24c, 24d) für die Verbindung zu dem Backendserver (12, 14) umfasst.

8. System (2) nach einem der Ansprüche 6 oder 7,
**dadurch gekennzeichnet, dass**
die Verbindungseinheit (6) Teil einer Mobilkommunikationseinheit (16) ist.

9. System (2) nach Anspruch 8, **dadurch gekennzeichnet, dass** das System (2) eine Mobilkommunikationseinheit (16) umfasst, wobei die Mobilkommunikationseinheit (16) vorzugsweise eine eSIM-Karte zum Aufbauen einer Internetkonnektivität umfasst.

10. System nach einem der Ansprüche 6 bis 9,
**dadurch gekennzeichnet, dass**
das System ferner eine Verschlüsselungseinheit zum Verschlüsseln der zu übertragenden Daten umfasst.

11. System (2) nach einem der Ansprüche 6 bis 10,
**dadurch gekennzeichnet, dass**
das System ferner eine Vielzahl von Backendservern (12, 14) zum Ausführen von Diensten umfasst, wobei einzelne Backendserver (12, 14) über eine oder mehrere Netzwerkschnittstellen (24a, 24b, 24c, 24d) mit der Verbindungseinheit verbunden sind.

12. Kraftfahrzeug (26), umfassend ein System (2) nach einem der Ansprüche 6 bis 11.

## Revendications

1. Procédé permettant de commander une communication sur Internet dans un véhicule automobile (26), le procédé comprenant :
- la réception d'une demande utilisateur (42) provenant d'un terminal utilisateur (4) au moyen d'un serveur mandataire, dans lequel le serveur mandataire est un serveur SOCKS et est compris dans une unité de connexion (6), la demande utilisateur demandant une connexion entre le terminal utilisateur (4) et un serveur dorsal (12, 14) ;
- le traitement (44) de la demande utilisateur par l'unité de connexion (6) et la sélection par l'unité de connexion (6) d'une interface réseau (24a, 24b, 24c, 24d) permettant de connecter le terminal utilisateur (4) au serveur dorsal (12, 14) ; et
- la sélection (46) d'un serveur DNS (22a, 22b, 22c) sur la base de l'interface réseau sélectionnée (24a, 24b, 24c, 24d) permettant de résoudre le localisateur de ressources uniforme (URL) du serveur dorsal (12, 14) pour créer une connexion entre le terminal utilisateur (4) et le serveur dorsal (12, 14),
- dans lequel le traitement (44) de la demande utilisateur par l'unité de connexion (6) est réalisé par la lecture d'une table d'attribution (18), dans lequel la table d'attribution (18) est stockée dans une unité de stockage, dans lequel la table d'attribution (18) comprend des entrées pour des serveurs dorsaux (12, 14).

2. Procédé selon la revendication 1,
**caractérisé en ce que,**
le traitement (44) de la demande utilisateur comporte la sélection de serveurs DNS possibles pour une connexion au serveur dorsal demandé (12, 14).

3. Procédé selon l'une des revendications précédentes,
**caractérisé en ce que,**
lors du traitement de la demande utilisateur (44), la réalisation d'une vérification pour déterminer s'il existe une entrée dans une table d'attribution (18) pour le serveur dorsal demandé (12, 14), l'entrée définissant une interface réseau spécifique (24a, 24b, 24c, 24d) pour une connexion au serveur dorsal (12, 14).

4. Procédé selon l'une des revendications précédentes,
**caractérisé en ce que,**
dans le cadre de l'exécution d'une procédure d'enregistrement, la procédure d'enregistrement comprend de préférence l'inscription d'un serveur dorsal (12, 14) dans une table d'attribution (18) permettant de définir des interfaces réseau spécifiques (24a, 24b, 24c, 24d) pour une connexion au serveur dorsal (12, 14).

5. Procédé selon l'une des revendications précédentes,
**caractérisé en ce que,**
une pluralité de demandes utilisateurs permettant de créer une connexion entre un dispositif terminal utilisateur (4) et un serveur dorsal (12, 14) sont reçues par l'unité de connexion (6) et traitées dans celle-ci, au moins partiellement simultanément.

6. Système (2) permettant de commander une communication sur Internet dans un véhicule automobile (26), dans lequel le système (2) est configuré pour réaliser un procédé selon l'une des revendications précédentes.

7. Système (2) selon la revendication 6,
**caractérisé en ce que,**
le système comprend en outre une unité de stockage pour stocker une table d'attribution (18) permettant de définir des interfaces réseau spécifiques (24a, 24b, 24c, 24d) pour une connexion au serveur dorsal (12, 14).

8. Système (2) selon l'une des revendications 6 ou 7,
**caractérisé en ce que,**
l'unité de connexion (6) fait partie d'une unité de communication mobile (16),

9. Système (2) selon la revendication 8, **caractérisé en ce que** le système (2) comprend une unité de communication mobile (16), dans lequel l'unité de communication mobile (16) comprend de préférence une carte eSIM permettant d'établir une connectivité Internet.

10. Système selon l'une des revendications 6 à 9,
**caractérisé en ce que,**
le système comprend en outre une unité de chiffrement permettant de chiffrer les données à transmettre.

11. Système (2) selon l'une quelconque des revendications 6 à 10, **caractérisé en ce que,**
le système comprend en outre une pluralité de serveurs dorsaux (12, 14) permettant d'exécuter des services, dans lequel des serveurs dorsaux individuels (12, 14) sont connectés à l'unité de connexion par l'intermédiaire d'une ou plusieurs interfaces réseau (24a, 24b, 24c, 24d).

12. Véhicule automobile (26), comprenant un système (2) selon l'une quelconque des revendications 6 à 11.
